Europäisches Patentamt

European Patent Office

Office européen des brevets

(11) Publication number: **0 325 487**
**A1**

## EUROPEAN PATENT APPLICATION

(21) Application number: 89300568.6

(51) Int. Cl.⁴: $B\ 01\ J\ 29/06$

(22) Date of filing: 20.01.89

(30) Priority: 20.01.88 US 146013

(43) Date of publication of application:
26.07.89 Bulletin 89/30

(84) Designated Contracting States:
AT BE CH DE ES FR GB GR IT LI LU NL SE

(71) Applicant: ENGELHARD CORPORATION
Menlo Park, CN 40
Edison New Jersey 08818 (US)

(72) Inventor: Andrews, Robert W.
45 Sutton Place
Toms River New Jersey (US)

(74) Representative: Geering, Keith Edwin et al
REDDIE & GROSE 16 Theobalds Road
London WC1X 8PL (GB)

A request for correction of claim 10 has been filed pursuant to Rule 88 EPC. A decision on the request will be taken during the proceedings before the Examining Division (Guidelines for Examination in the EPO, A-V, 2.2).

(54) Production of zeolitic catalyst.

(57) An economical method of manufacturing enhanced fluidization (low density) catalysts by in situ crystallization of zeolite in precursor microspheres of calcined kaolin clay. The precursor microspheres are prepared by spray drying a slurry of kaolin clay all of which is hydrated (raw or uncalcined), the slurry being flocculated as a result of the presence of an alkaline water soluble sodium silicate in sufficient amount to achieve a slurry in a flocculated rather than deflocculated state. The slurry is spray dried and calcined. The calcined microspheres are reacted with an alkaline solution to crystallize the zeolite (synthetic crystalline faujasite) and ion-exchanged.

EP 0 325 487 A1

**Description**

## PRODUCTION OF ZEOLITIC CATALYST

U.S. 3,506,594, U.S. 3,647,718, U.S. 3,657,154, U.S. 3,663,165, U.S. 3,943,233, U.S. 4,048,284, U.S. 4,235,753, U.S. 4,520,119, U.S. 3,932,268, and U.S. 4,581,341 describe processes of making hard (attrition-resistant) microspherical crystalline zeolitic molecular sieve fluid cracking catalysts from preformed alumina-silica microspheres obtained by slurrying raw (fully hydrated) kaolin clay $(Al_2O_3 \cdot 2SiO_2 \cdot 2H_2O)$, calcined kaolin clay $(Al_2O_3 \cdot 2SiO_2)$ or mixtures thereof with water containing a deflocculating agent and spray drying the resulting deflocculated fluid slurry to form microspheres, which are then calcined and reacted with sodium hydroxide solution under hydrothermal conditions until sodium faujasite crystallizes in a porous alumina enriched residue of calcined clay. The microspheres are separated from the mother liquor, which is a solution of sodium silicate (typically having a $SiO_2/Na_2O$ mole ratio about 2/1), ion-exchanged to replace sodium with cations such as ammonium, rare earth or both, and calcined before or during use. This technology, sometimes referred to as in situ kaolin processing, has been implemented commercially for many years, accounting for a significant quantity of the fluid cracking catalyst used worldwide.

Two distinct types of process are described in the aforementioned patents; two different types of FCC catalyst result. Both are made from microspheres of kaolin calcined to undergo the exotherm, with metakaolin being preferably present. In one type of process, the calcined microspheres that are reacted with the sodium hydroxide solution are spray-dried mixtures of calcined and hydrous (raw) kaolin which are subsequently calcined at temperatures to cause the hydrous kaolin in the microspheres to undergo the characteristic kaolin exotherm (ca. 1800°F). See, for example, Example 1 of U.S. 3,506,594. In the other types of process, the microspheres are made by spray drying a slurry composed entirely of hydrous kaolin clay, the slurry containing tetrasodium pyrophosphate (TSPP) as a deflocculating agent. These microspheres are then calcined to cause the clay to undergo the exotherm.

As described in the aforementioned patents and as practiced commerically, the slurries of raw kaolin clay employed as spray dryer feed to form the microspheres were always prepared by adding a small amount of a deflocculating (dispersing agent) to provide a fluidized dispersed clay slip. Dispersion (deflocculation) was practiced to fluidize the slurries and facilitate spray drying at higher solids in order to produce harder products. See U.S. 3,647,718, the paragraph beginning at line 33.

The aforementioned technology, as practiced using only raw kaolin as spray dryer feed, resulted in highly attrition resistant, catalytically active and selective fluid catalysts which were more dense (e.g., density of at least 0.9 cc/g) and more attrition resistant than most commerically available fluid cracking catalysts.

Some of the patents, above listed, teach that the use of mixtures of calcined and raw kaolin clay in the spray dryer feed slurry results in calcined microspheres and crystallized microspheres that are less dense, more porous and less attrition resistant than microspheres obtained by using only the hydrated kaolin clay as spray dryer feed.

U.S. 4,601,997 contains related teachings as to the desirability of including calcined kaolin clay with uncalcined kaolin clay in a deflocculated slurry to increase the porosity of calcined bodies of kaolin clay. A discussion of the effect of the particle size distribution of clay and degree of agglomeration on macropore structure and hardness also appears in this patent.

The commercially available in situ fluid kaolin catalysts prepared as described above using a deflocculated slurry containing only raw kaolin clay have been used successfully in many FCC (fluid catalytic cracking) units throughout the world. The use has been restricted, however, to FCC units in which the fluidization characteristics of the catalysts were such that the catalyst microspheres could be circulated effectively throughout the unit. Good fluidization is of concern to a refinery because a cracking catalyst having good fluidizaton characteristics is more easily circulated, resulting in better process control. It is generally believed that high total porosity (low density) improves the fluidization characteristics of a catalyst. However, porous catalysts tend to be les attrition-resistant than their less porous counterparts. The high density characteristic of the commercial in situ catalysts has been accompanied by outstanding attrition-resistance. Nevertheless, such catalysts were not the most desirable catalysts for those FCC units which require catalysts having lower density, lower attrition-resistance and better fluidization characteristics. Many refiners now require catalysts which have a reduced tendency to deaerate in transfer lines between the FCC reactor and regenerator. In these cases, higher attrition is preferred because continuous attrition produces a source of fines which also enhance fluidization. It is know that a distribution particle size (gradation) is necessary to maintain proper fluidization dynamics and also maintain cyclone efficiency. See A. L. Saxton and A. C. Worley, Oil Gas J., 68 (20) 82 (1970. FCC catalysts that attrite to particle sizes below the size range retained by cyclones may enhance fluidizaton and assure the maintenance of size gradation required for proper fluidization.

This invention can utilize the economic benefits of the in situ kaoline route using solely raw (uncalcined) kaolin clay as spray dryer feed, while producing catalysts that are both porous and of satisfactory resistance to attrition.

This invention results from our finding that practice of the in situ technology using all raw kaolin clay as spray dryer feed can result in a finished catalyst having enhanced fluidization characteristics with desirably moderated attrition resistance, if clay slurry to be fed to the spray dryer is prepared with sodium silicate in an amount such that the slurry is in flocculated condition rather than deflocculated condition as recommended in the patent literature and as heretofore practice commercially. The flocculated condition of the slurry is readily identified by physical observation; a flocculated slurry will have a thick creamy texture; a dispersed slurry will have a thin, fluid texture.

Use of raw kaolin clay in a slurry in flocculated state or condition unexpectedly leads to microspheres that are more porous both when the microspheres are calcines and when the calcined microspheres are crystallized. Preferred porosity in the crystallized product, e.g. so that total pore volume is 0.34 cc/g or greater and the volume of pores in the 600-20,000 Angstrom diameter range is 0.24 cc/g or less, results in catalysts having enhanced fluidization combined with desired attrition resistance, i.e., 25% loss or below as determined by the Roller Test described hereinafter.

The invention accordingly provides a flocculated slurry of raw kaolin clay in an aqueous solution of akaline silicate flocculant. It also provides a method of forming a slurry of raw kaolin clay which comprises slurrying the raw kaolin in water containing sufficient dissolved alkaline silicate to flocculate the clay. The flocculated raw kaolin slurry can then be subjected to the following steps for production of a zeolitic catalyst - spray drying of the slurry to form microspheres; calcining the microspheres to dehydrate the raw kaoline and cause it to undergo the characteristic kaolin exotherm; hydrothermally treating the calcined microspheres, optionally together with metakaolin, in aqueous alkali untin faujasite crystallizes in the microspheres; ion exchanging the resulting zeolitic product; and then heating the ion-exchanged microspheres - e.g. before use, or during use as a fluid cracking catalyst. The zeolitic microspheres from the hydrothermal treatment are usually separated from the mother liquor, and before ion exchange they may be treated with aqueous alkaline silicate to reduce the volume of micropores. The invention resides not only in the initial flocculated slurry and in the final ion-exchanged catalyst, but also in each of the intermediate products resulting from the above described process steps. The alkaline silicate employed is preferably a sodium silicate, more preferably sodium disilicate, and is suitably employed in an amount of about 2% (anhydrous basis) of the weight of raw kaolin clay. The raw kaoline is suitably a mixture of coarse and fine particles. The hydrothermal treatment is suitably carried out at an initial temperature of 65 to 130°F followed by heating at a temperature below 200°F. The hydrothermal treatment is preferably terminated before a substantial quantity of sodium zeolite B crystallizes. The aqueous alkali for the hydrothermal treatment is preferably sodium hydroxide solution, e.g. of a concentration of 12 to 16%.

In one aspect, this invention provides an economical method of manufacturing enhanced fluidization (low density) FCC catalyst. For example a fluid microspherical crystalline zeolitic molecular sieve catalyst composite is obtained by spray drying a flocculated aqueous slurry of kaolin clay all of which is in raw (fully hydrated) condition, the slurry also containing water-soluble alkaline sodium silicate in an amount sufficient to flocculate the slurry, and calcining the resulting spray dried microspheres at a temperature and for a time such that the aluminum silicate material in the microspheres undergoes or passes through the characteristic kaoline exotherm. The microspheres are preferably mixed together with a small amount of metakaolin, preferably in the form of microspheres, and the microspheres are slurried in a dilute sodium hydroxide solution to form a slurry that is sufficiently fluid to be agitated. The slurry is subjected to hydrothermal treatment under agitation and without permitting substantial dehydration to take place until a faujasite-type zeolite (zeolite X or Y, preferably zeolite Y) crystallizes, the crystallization being terminated before zeolite B forms to an appreciable extent.

The crystallized particles are separated from the mother liquor, impregnated with a controlled amount of water-soluble alkaline sodium silicate, preferably sodium disilicate, to reduce the volume of micropores (pores having a diameter less than 100 Angstom units), and then ion-exchanged to replace sodium ions with suitable cation(s), the selection of which is within the skill of the art. The ion-exchanged microspheres are then thermally treated during manufacture or use. The finished catalyst can have a density below 0.9 cc/g, preferably less than 0.75 cc/g, a total porosity of at least 0.34 cc/g with no more than 0.24 cc/g of porosity in pores in the size range of 600 to 20,000 Angstrom units diameter. The production of catalyst microspheres with adequate attrition resistance requires that a minimum amount (<0.24 cc/g) of porosity be in the larger (600-20,000A) pores. There is a significant correlation between attrition and macroporosity. Porosity measurements, referred to herein, are obtained by procedures described in U.S. 4,601,997 (supra).

In the prior art process for making low density FCC catalysts by the in situ method a portion of the microsphere feed was calcined twice, once before incorporation and then again after the microspheres are formed. The process of the present invention eliminates this double calcining cost.

The present process is also preferred because the raw materials are les costly to spray dry. The hydrous kaolin, sodium silicate feed is less viscous and can therefore be spray dried at higher solids than slurries containing mixtures of calcined and raw kaolin. The more viscous slurry of calcined and raw kaolin must be spray dried at lower clay solids than the less viscous all raw kaolin in order to achieve the same particle size distribution of the atomized slurry. Although many dryers are now equipped with variable speed atomizers which can be easily adjusted to correct the particle size distribution when the feed viscosity changes, others have fixed speed drives which are much more difficult and time consuming to modify. Ideally, the viscosity of the spray dryer feed viscosity of the current invention should be similar to that used to prepare conventional in situ fluid cracking catalysts, so that grade changes are less costly in terms of lost production. A more viscous slurry would also increase electrical costs (i.e., to pump, mix, and atomize the slurry).

## DESCRIPTION OF PREFERRED EMBODIMENTS

(A) Preparation of the mixture of calcined microspheres

The starting material employed in producing these microspheres is a micron-size (powdered) clay material of raw kaolin clay. The term "raw" kaolin clay refers to a naturally-occurring kaolin clay which contains all the water of crystallization (hydration) normally present in the clay. Typically water of crystallization is about 14% by weight for high purity raw kaolin. Low-iron, high purity raw clays are preferred. Preferably, the clay is refined at least to the extent that it is degritted. The clays employed are typically polydisperse, i.e. the clay contains particles having a broad particle size distribution including an appreciable content of particles finer than $\frac{1}{2}$ micron and larger than 2 micron. The use of polydisperse clay is desirable to achieve the desired flocculated state and thereby achieve controlled porosity and produce low density.

Preferably, the raw clay contains an appreciable content (at least 10% by weight) of particles finer than 1 micron with an average particle size of about 2 microns. Raw clay of suitable particle size distribution is obtainable by wet fractionzation (e.g., centrifugation) to recover clay fractions of desired particle size. All particle sizes of clay, as used herein, refer to sizes in microns (equivalent spherical diameter or e.s.d) determined by sedimentation using a SEDIGRAPH® 5000 analyzer. Particle sizes will vary somewhat with the particle size equipment used and with operating conditions.

The term "kaolin clay" as used herein embraces clays, the predominating mineral constituent of which is kaolinite, halloysite, nacrite, dickite, anauxite or mixtures thereof.

To facilitate spray drying, the powdered hydrated clay (or mixture thereof with calcined clay) is mixed in water in the presence of a water soluble alkaline grade of sodium silicate in an amount sufficient to effectively flocculate the slurry. The sodium silicate used typically has a $SiO_2/Na_2O$ ratio of 2/1, but is not limited to that. Usually the amount of $SiO_2$ added is not less than 1.2 wt.% based on the total weight of clay solids. The preferred range of $SiO_2$ added is 1.2 - 1.5% by weight. Les than 1.2 wt.% added $SiO_2$ can result in insufficient attrition resistance. Slurries containing up to about 55% solids may be prepared. At solids contents above 55%, the slurry may be too viscous to spray, especially when the spray dryer is operated with a rotary atomizer. Contrary to the teachings of U.S. 3,647,718, regarding the use of raw kaolin clay as the sole clay material, the slurry is flocculated, not deflocculated, before spray drying.

Satisfactory results were not obtained when attempts were made to flocculate clay slurries with a condensed phosphate (tetrasodium pyrophosphate) dispersant. Even when sufficient phosphate dispersant was used to flocculate the slurry of clay, microspheres having significantly increased porosity were not produced.

Several procedures can be followed in mixing the ingredients to form the slurry. One procedure, by way of example, is to add the water to the pulverized clay and then incorporate the sodium silicate flocculating agent. The slurry can be mechanically worked to produce slurries of desired viscosity characteristics.

Spray dryers with countercurrent, cocurrent or mixed countercurrent and cocurrent flow of slurry and hot air can be employed to produce the microspheres. The air may be heated electrically or by other indirect means. Combustion gases obtained by burning hydrocarbon fuel in air can be used.

Spray drying results in the evaporation of water from droplets of the slurry and the formation of microspheres. Microspheres about 20 to 150 microns in equivalent spherical diameter are desired for most catalytic operations using fluidized contact masses.

The particle size distribution of FCC catalysts must be sufficiently broad to permit fluidization. It is well known that the particle distribution of microspheres obtained by spray drying is affected by the solids content (hence, fluidity) of the slurry fed to the spray dryer. A more viscous slurry must be spray dried at a lower solids content to achieve the same particle size distribution.

Using a cocurrent dryer, air inlet temperatures to 1200°F. may be used when the clay feed is charged at a rate sufficient to produce an air outlet temperature of 250°F to 600°F. At these temperatures, free moisture is removed from the slurry without removing water of hydration (water of crystallization) from the raw clay ingredient. Dehydration of some or all of the raw clay during spray drying is, however, within the scope of the invention. The spray dryer discharge may be fractionated to recover microspheres of desired particle size.

(B) Preparation of the mixture of calcined microspheres

One portion of spray dryer discharge may be calcined at a temperature of about 1600°F. to about 2200°F. and for a time such that when the calcined microspheres are tested by standard differential thermal analysis (DTA) the exothermic peak at about 1800°F is not observed. In other words, this portion of the microspheres is calcined under conditions such that the raw clay undergoes or passes through the exotherm after the microspheres have been formed. The kaolin endotherm and exotherm can be readily determined by differential thermal analysis (DTA), using the technique described in Ralph E. Grim's "Clay Mineralogy," page 203, published by McGraw Hill Book Company, Inc. (1952). The other portion of the spray dryer discharged may be calcined (thermally dehydrated) at a temperature of about 1000°F. to 1500°F., usually about 1350°F., for a time sufficient to remove water and convert any raw kaolin to metakaolin. The two batches of microspheres may then be combined in appropriate proportions, described below, and the mixture employed with a suitable caustic solution to form the zeolitic molecular sieve composite.

4

The calcined microspheres composed of metakaolin may be obtained from different slurries of clay material than those used to form the microspheres of clay calcined to undergo the exotherm. For example, the metakaolin microspheres may be obtained by spray drying a slurry containing raw (hydrated) kaolin and metakaolin and calcining the microspheres at 1350°F. for 2 hours. These microspheres may then be employed, by way of example, with microspheres obtained by spray drying a flocculated slip consisting of hydrated clay as the sole clay material and calcining the resulting microspheres at about 1900°F. for a sufficient time to cause all of the hydrated kaolin to undergo or pass through the exotherm.

The calcined microspheres composed predominantly of metakaolin are used in minor amounts and it is not necessary that the feed slurry to the spray dryer be composed entirely of raw clay or that the slurry be flocculated since energy costs resulting form the presence of calcined clay in the feed slurry will have minimal impact on cost or product quality. In fact, powdered metakaolin (not microspheres) could be used.

The microspheres calcined to undergo or pass through the exotherm are employed in an amount such as to provide from about 0 to 20, preferably 5 to 10 parts by weight, metakaolin to 100 parts by weight of the mixture of metakaolin and calcined microspheres that have undergone or passed through the exotherm, the latter microspheres having been prepared in accordance with this invention by spray drying a flocculated slurry of raw kaolin clay. A low ratio of metakaolin to calcined kaolin clay that has undergone the exotherm favors the crystallization of zeolite Y. Zeolite X is obtained as the ratio is increased. When too much metakaolin is present, the desired crystalline product may not be obtained even when the hydrothermal treatment is carried out for long periods, e.g., 48 hours or more. On the other hand, when too little metakaolin is present in the reaction liquid, the quantity of zeolite that crystallizes may be less than desired. This is especially true if the calcined clay in the other microspheres has passed through the characteristic kaolin exotherm.

(C) Formation of aqueous reaction mixtures

The microspheres are reacted with an aqueous alkaline liquid in which they are suspended, the liquid having a composition predetermined to result in the crystallization of a desired percentage of faujasite zeolite molecular sieve. Only a portion of the constituents of the calcined microspheres reacts to form the zeolitic molecular sieve and a sodium disilicate mother liquor. Thus a composite of crystalline sieve and an alumina-enriched amorphous alumina-silica residue is present in the crystallized microspheres. Preferably, after crystallization the microspheres should contain above 15% crystalline faujasite-type zeolite, most preferably above 20% zeolite. The term "faujasite-type zeolite" embraces zeolite X and zeolite Y. Preferably, a high silica form of sodium Y is crystallized, especially sodium zeolite Y having a $SiO_2/Al_2O_3$ molar ratio in excess of 4.0. X-ray diffraction techniques that may be used to estimate zeolite quantity, distinguish zeolite X from zeolite Y, and determine the silica-to-alumina molar ratios of zeolite Y are known in the art.

The aqueous alkaline solution is employed in amount that forms a suspension which is sufficiently fluid to be stirred and also contains sufficient $Na_2O$ at an operable concentration to crystallize the desired faujasite zeolite. Recommended is the use of sufficient solution of provide from about 0.5 to 1.0 mole $Na_2O$ per mole $Al_2O_3$ in the mixture of calcined microspheres. Sodium hydroxide solutions of about 10% to 22% concentration (w./w.) are recommended. Solutions of 14% to 19% concentration are preferred. Especially preferred are solutions of 16 to 18% concentration. When the concentration of $Na_2O$ in the treating liquid is too low, the zeolite may not crystallize. When the concentration is too high, there may be insufficient liquid to produce a fluid suspension without employing a $Na_2O/Al_2O_3$ molar ratio that is excessively high and results in a zeolite having an undesirably low $SiO_2/Al_2O_3$ molar ratio.

The microspheres are reacted with the sodium hydroxide solution in which they are immersed while the suspension is agitated and maintained at a temperature of about 65°F. to about 130°F. for about 6 to 48 hours. Crystallization does not take place during this phase of the hydrothermal treatment. Excellent results have been obtained at a temperature of 100°F. for 24 hours.

To crystallize the zeolite, the temperature of the suspension is increased to about 150°F. to 200°F. During the crystallization, means should be provided to prevent substantial change in water content due to loss of water from the system. This may be done, for example, by using a closed reactor, by providing the reactor with water-cooled jacket to condense water which evaporates, or, when operating in an open reactor, by adding water as it is lost from the reactor by evaporation. It is also within the scope of the invention to employ an open reactor and cover the aqueous suspension with oil. In this case, the impeller used to agitate the system should be well below the oil layer in order to maintain the oil as a distinct upper layer.

Crystallization time varies with the composition of the reaction mixture and temperature and is usually 8 to 48 hours at a temperature of about 180°F.

As described in U.S. 3,647,718, a substantial portion of the silica content of the calcined microspheres dissolves in the caustic reaction liquid during the hydrothermal treatments. As a result, the crystallized microspheres are present in a sodium silicate mother liquor having a $SiO_2/Na_2O$ molar ratio of approximately 2/1.

After reaction and crystallization, the microspheres are separated from the mother liquid by suitable means such as filtration.

A reduction in the volume of pores in the catalyst having diameters in the range of 20-100 Å can be accomplished by the technique known as silica retention. This procedure also tends to increase attrition-resistance. See U.S. 4,493,902 as column 12; see also U.S. 3,663,165. Silica retention can be achieved by separating the crystallized microspheres from the sodium silicate mother liquor, thereby leaving a portion of the mother liquor entrained in pores in the microspheres. The microspheres, with entrained mother liquor, are then dried, using, for example, a flash drier having an inlet temperature of about 1100° F. Alternatively, silica retention can be achieved by contacting the crystallized microspheres, after they are separated from mother liquor, with an alkaline sodium silicate solution, e.g., a solution containing about 20% by weight $SiO_2$, and drying the microspheres with occluded sodium silicate. Sodium in the microspheres is then exchanged for more suitable cations such as, for example, ammonium, rare earth metals or mixtures thereof. The exchanged microspheres are dried and then activated by air calcination, steaming or both.

All X-ray diffraction data mentioned herein refer to values obtained by the procedure and with the equipment described in U.S. 3,391,994 (supra). The percentage of zeolite Y refers to values obtained from X-ray diffraction data using calculations described in said patent. The crystalline zeolite referred to as "zeolite B" was identified by a peak of of maximum intensity at 28.2° 2θ. Zeolite B is descirbed in U.S. 3,008,803. Porosity measurements are determined by conventional mercury intrusion porosimetry using a porosimeter manufactured by Quantachrome Corp. See U.S. 4,601,997.

Typical physical properties of kaolin clay used in the accompanying illustrative examples are summarized below:

| PRODUCT | ASP® 400 | ASP® 600 | SATINTONE/ WHITEX® |
|---|---|---|---|
| Condition | Raw Kaolin | Raw Kaolin | Calcined |
| Physical Form | Powder | Powder | Powder |
| Dispersant in product as supplied | None | None | None |
| pH | 3.5-5.0 | 4-5 | 5-6 |
| Oil Absorp-tion/(Ru-bout Method) | 30-35 | 31-36 | 50-60 |
| Average Particle Size (microns e.s.d) | 4.8 | 0.6 | 1.4 |
| Particle Size Distribution wt.% finer than microns, e.s.d | | | |
| 20 | 98 | 0 | 0 |
| 10 | 85 | 0 | 0 |
| 5 | 50 | 87 | 87 |
| 2 | 22 | 80 | 65 |
| 1 | 9 | 65 | 42 |
| 0.4 | negligible | 38 | negligible |

Typical Chemical analyses for both raw grades (wt.%) is $Al_2O_3$ - 38.8%, $SiO_2$ - 45.2%; $Na_2O$ - less than 1%; $TiO_2$ -less than 2%; L.O.I. (loss on ignition) - about 14%. The chemical analyses of the calcined grade is substantially the same, but L.O.I. is below 1%.

The EAI attrition test is described in U.S. 4,493,902. The Roller test is a semi-quantitative in-house technique in which a sample of catalyst is subjected to a high velocity jet of air, which then carries the sample along with the air stream into a separation chamber. Particles less than 20 microns are entrained and particles greater than 20 microns settle back into the sample tube where they are again impinged by the air jet. After 45 minutes, the amount of fines generated is taken as a a measure at the catalyst attrition resistance.

In the following examples, low density products ( < 0.9 cc/g) were prepared by a prior art method (Example 1) and by the method of the invention (Example 2), both modified by silica retention.

Example 1

Catalyst 1 was prepared in accordance with the prior art by spray drying a flocculated slurry of a mixture of 30% SATINTONE®WHITEX calcined kaolin, 70% by weight ASP®600 raw kaolin clay and 2 lbs. sodium disilicate (anhydrous weight) per 98 lbs. of clay solids. The solids in the slurry was 55%. The microspheres

6

EP 0 325 487 A1

were calcined in an 1850°F muffle furnace for 1 hour.

Microspheres composed of metakaolin were formed from a dispersed slurry (about 62% solids) of ASP 600 clay and tetrasodium pyrophosphate (0.3 wt.%, based on the dry clay weight.) The slurry was spray dried and the resulting microspheres were calcined at about 1350° to convert the clay to metakaolin About 5 parts by weight of the microspheres containing metakaolin were mixed with 95 parts by weight of the microspheres obtained in accordance with this invention, by spray drying the flocculated slurry and calcining the resulting microspheres at about 1850°F.

The mixture of calcined microspheres was added to an agitated 1 liter resin kettle containing 15% NaOH solution (0.68 moles $Na_2O$/mole $Al_2O_3 \cdot 2SiO_2$ in the microspheres). The mixture was first aged at 100°F for six hours, then crystallized at 180°F for 10 to 20 hours. The mother liquor was adjusted to 22% by weight sodium disilicate by adding the required amount of concentrated (44%) sodium disilicate. The catalyst containing about 20% zeolite Y (as determined by x-ray) was then deliquored by filtering over a laboratory Buchner funnel. The cake was dried in a 220°F oven. The catalyst was then ion exchanged to the $NH_4+$ form and calcined at 110°F.

Example 2

Catalyst 2 was prepared int he same manner as Catalyst 2, except the feed to make the microspheres calcined at 1850°F. was all raw kaolin (a mixture of 60% by weight ASP-400/40% ASP-600 clay). Particle size of the mixture was approximately 50% finer than 2 microns. Solids in the spray dryer feed was 55%. The feed slurry was in flocculated condition.

Following is a summary of properties of the catalysts of Examples 1 and 2 that have an effect on the fluidization of the catalysts in an FCC unit:

| Catalyst | EAI (%/sec) | Roller Attrition (%) | Bulk Density (g/cc) | Total Pore Volume cc/g in 30-20,000 A dia. pores |
|---|---|---|---|---|
| (1) | 1.2 | 10 | 0.85 | 0.31 |
| (2) | 1.5 | 8 | 0.72 | 0.34 |

These data show that the catalyst obtained by spray drying the all hydrous kaolin feed and calcining at 1850°F (Catalyst 2) was substantially less dense, somewhat higher in porosity, and yet was essentially equivalent in attrition resistance to Catalyst 1. This was an an unexpected result since normally there is an inverse correlation between density and attrition resistance.

This invention provides, inter alia, a method for producing a zeolitic catalyst, the method comprising forming an aqueous slurry consisting essentially of raw kaolin clay and containing sodium silicate in an amount sufficient to form a flocculated slurry of the clay, spray drying said slurry (e.g. into hot air) to form microspheres, calcining said microspheres at a temperature and for a time such that the raw kaolin clay is substantially completely dehydrated and undergoes the characteristic kaolin clay exotherm, slurrying the calcined microspheres (preferably with metakaolin) in an aqueous solution of sodium hydroxide (e.g. containing at least 0.5 mole $Na_2O$ per mole $Al_2O_3$ in the microspheres), subjecting the slurry to hydrothermal treatment until faujasite crystallizes (usually with formation of a sodium silicate mother liquor) and ion-exchanging the hydrothermally treated microspheres (preferably after separating them from at least a poretion of mother liquor and/or drying them).

**Claims**

1. A flocculated slurry of raw kaolin clay in an aqueous solution of alkaline silicate.

2. Spray dried microspheres of slurry according to claim 1.

3. Microspheres according to claim 2 which have been calcined so that the kaolin is dehydrated and has undergone the characteristic kaolin exotherm.

4. Faujasite-containing microspheres obtainable by hydrothermally treating microspheres according to claim 3, optionally in admixture with metakaolin, in aqueous alkali until faujasite crystallizes in the microspheres.

5. Ion-exchanged microspheres according to claim 4.

6. Thermally treated ion-exchanged microspheres according to claim 5.

7. A method of forming a slurry suitable for zeolite catalyst production, the method comprising mixing raw kaolin clay (preferably a mixture of coarse particle size and fine particle size clay containing particles finer than 1 micron and an average size of about 2 microns) with water containing sufficient dissolved alkaline silicate to flocculate the clay, said alkaline silicate preferably being sodium silicate (e.g. sodium disilicate) and/or preferably amounting to about 2% (anhydrous basis) of the weight of the raw kaolin clay.

8. A method according to claim 7 including one or more of the subsequent sequential steps of
    (1) spray drying the flocculated slurry to form microspheres;

7

(2) calcining the spray-dried microspheres so that the kaolin is dehydrated and undergoes the characteristic kaolin exotherm;

(3) slurrying the calcined microspheres, optionally together with metakaolin, in aqueous alkali (e.g. sodium hydroxide solution, preferably of 10 to 22% w/w concentration) and hydrothermally treating them until faujasite crystallizes, said hydrothermal treatment preferably being terminated before substantial crystallization of zeolite B and/or preferably being conducted initially at 65 to 130°F followed by heating at below 200°F;

(4) ion-exchanging the hydrothermally treated microspheres; and

(5) thermally treating the ion-exchanged microspheres.

9. A zeolitic catalyst comprising microspheres according to claim 5 or 6 having a total pore volume of at least 0.34 cc/g with 0.24 cc/g or less of porosity in the pore size range of 600 to 20,000 Angstrom units.

10. A method according to claim 9 including at least one or

(a) separating the hydrothermally treated microspheres from at least part of the mother liquor after step (3); and

(b) treating the hydrothermally treated microspheres, before step (4), with aqueous alkaline silicate to reduce their micropore content.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 367 886 (W.L. HADEN) --- | | B 01 J 29/06 |
| A | US-A-3 472 617 (C.V. McDANIEL) --- | | |
| A | I.E.C. PRODUCT RESEARCH AND DEVELOPMENT, vol. 22, no. 3, September 1983, pages 401-406, American Chemical Society, Washington, US; P. BOSCH et al.: "Synthesis of faujasite type zeolites from calcined kaolins" ----- | | |
| | | | TECHNICAL FIELDS SEARCHED (Int. Cl.4) |
| | | | B 01 J 29/00 |

The present search report has been drawn up for all claims

| Place of search | Date of completion of the search | Examiner |
|---|---|---|
| THE HAGUE | 02-05-1989 | DEVISME F.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)